# EUROPEAN PATENT SPECIFICATION

(11) **EP 3 410 598 B1**
(45) Date of publication and mention of the grant of the patent: **26.08.2020**
(21) Application number: 18175228.8
(22) Date of filing: 30.05.2018
(51) Int. Cl.: H02S 20/24

(54) **CONSTRUCTION ELEMENT FOR A SUPPORT STRUCTURE FOR SOLAR PANELS, BOTTOM SUPPORT AND UPRIGHT FOR FORMING THEREOF, AND CORRESPONDING SUPPORT STRUCTURE**
BAUELEMENT FÜR EINE TRAGENDE STRUKTUR FÜR SOLARMODULE, UNTERER UND AUFRECHTER STÜTZE, UND ENTSPRECHENDER TRAGENDER STRUKTUR
ELEMENT STRUCTUREL POUR UNE STRUCTURE DE SUPPORT DE MODULES SOLAIRES, SUPPORT INFERIEUR ET SUPPORT VERTICAL POUR SA FABRICATION, ET STRUCTURE DE SUPPORT CORRESPONDANTE

(30) Priority: 30.05.2017 NL 2018991
(43) Date of publication of application: 05.12.2018
(73) Proprietor: GroenLeven B.V., 8447 GM Heerenveen (NL); Mannen van Staal B.V., 8912 BG Leeuwarden (NL)
(72) Inventor: Bouwer, Sytse Jacob, 8939 BW Leeuwarden (NL); Bakker, Theunis, 8801 LZ Franeker (NL)
(74) Representative: Verdijck, Gerardus

(56) References cited:
- WO-A1-2015/110254
- WO-A2-2011/014655
- DE-U1-202005 014 645
- FR-A1- 3 009 572
- US-A1- 2014 069 483

## Description

The invention relates to a construction element for a support structure for solar panels. Solar panels, also referred to as photovoltaic cells, are usually disposed at an angle in order to thus maximize the incident energy. Arranging solar panels requires a structure which is able to bear the weight of the solar panels.

For placing solar panels on the ground use is usually made of a framework which is supported by number of construction elements resting on the ground and arranged at a distance from each other. The solar panels are then mounted on the framework.

It is known to anchor support structures for solar panels in the ground. This prevents the structure from being blown over. It is however not permitted to drill into the ground at every location, for instance if the ground is contaminated or if archaeological objects are expected to be present in the ground.

For solar panels on flat roofs it is known in practice to make use of support structures which are weighted so as to prevent being blown upward by the wind. The lower part of such a structure for instance comprises a receptacle into which gravel can be poured, or the structure is weighted by means of tiles. Such constructions were however designed for flat roofs and are thereby unsuitable for use on the ground, which is generally not flat.

An object of the invention is to obviate or at least prevent the above stated problems and to provide a support structure for solar panels which can be used on a non-flat ground without drilling. Document US2014/0069483A1 discloses a solar panel mount system for resting on a ground surface.

This object is achieved with the construction element for a support structure for solar panels according to claim 1 of the invention.

The bottom support is suitable for placing on the ground and weights the construction element. This prevents the structure from being blown over. The upright can be coupled adjustably to the bottom support by means of a screw connection. The lower outer end of the upright rests here on the bottom support, more particularly in the recess of the upper side of the bottom support. The screw connection is realized with screw means, such as screws or bolts. For the purpose of coupling the upright to the bottom support the threaded ends of the screw means are inserted through the openings in the edge parts of the upright and coupled to the coupling means of the bottom support. Since the one or more edge parts of the upright are situated some distance from the lower outer end of the upright, the upright can be tilted and/or rotated relative to the bottom support by adjusting the screws or bolts of the screw connection. The orientation of the upright relative to the bottom support is thereby adjustable in practically any direction. According to the invention, a number of construction elements can thus be placed on a non-flat ground, after which the uprights are then adjusted so that all uprights are positioned upright so that a framework can be coupled to the uprights for the purpose of supporting solar panels.

In other words, the structure according to the invention has the advantage that, by aligning the uprights of the support structure in a determined manner, the solar panels which are supported by the support structure can be placed at practically any angle in both the length direction and the width direction. An optimal positioning of the solar panels relative to the insolation and/or light radiation can hereby thus take place irrespective of the composition and the relief of the ground.

The construction element is therefore particularly suitable for use on a non-flat ground. If desired, the structure can however also be used on roofs or on a flat ground.

The coupling means of the bottom support are situated round the recess. The term "round the recess" does not mean that the coupling means are necessary disposed in a circle. The coupling means can for instance also be disposed in a rectangle, square, hexagon or other shape round the recess. The coupling means are preferably provided round the recess in a shape corresponding substantially to the shape of the recess, for instance circular, rectangular, square or hexagonal.

The bottom support for instance comprises a solid body, for instance of concrete. In an alternative example the bottom support comprises a receptacle which can be filled in situ with gravel, sand and/or concrete. Such a receptacle is for instance manufactured from plastic, wood, a metal or metal alloy such as steel.

The underside of the bottom support is preferably substantially flat.

The upright is for instance embodied as a hollow upright, for instance as a tube with circular section. The upright is for instance manufactured from a metal or metal alloy such as steel.

In the construction element of the support structure of the invention a total of at least three openings are provided around the upright, in the one or more edge parts.

In other words, at least three threaded ends can be received in the one or more edge parts of the upright.

One edge part, in which the at least three openings are arranged, is for instance provided. In another embodiment at least three edge parts are provided, wherein an opening is arranged in each edge part.

No more and no fewer than three openings are preferably provided in the one or more edge parts.

In a preferred embodiment an elevation, which is preferably equipped with the coupling means for forming the screw connection, is provided on the upper side of the bottom support.

The upright is therefore coupled adjustably to the elevation of the bottom support.

The elevation simplifies the relative alignment of a number of construction elements. This is because a support structure comprises a number of construction elements, which must be aligned relative to each other in order to enable a framework for the solar panels to be mounted on the uprights of the construction elements. The elevation in the bottom plate makes it possible to easily align the bottom supports with each other, preferably before the uprights are coupled to the bottom supports. A jig is for instance provided in which are arranged openings in which the elevation of the bottom supports fit. The openings in the jig are aligned. The jig comprises for instance two or more openings, for instance at least three openings. The jig can be placed over the elevations of two or more bottom supports so that the bottom supports can be placed at the correct distance from each other and in a straight line.

In a further preferred embodiment the recess is provided in the elevation of the bottom support.

In a further preferred embodiment the construction element comprises an additional weighting part which is provided with an opening in which the elevation of the bottom support fits for the purpose of placing the additional weighting part on the bottom support.

In other words, the additional weighting part can be placed on the bottom support, wherein the elevation of the bottom support reaches through the opening in the additional weighting part. Shifting of the additional weighting part is in this way prevented.

In the construction element of the support structure of the invention the lower outer end of the upright is rounded.

The lower outer end of the upright can thereby rest on the bottom support, while the tilting and rotating of the upright relative to the bottom support is supported.

In an embodiment of the invention the lower outer end of the upright is convex.

The advantage of a convex outer end is that the upright can be rotated and tilted relative to the bottom support in simple manner. In addition to this, the convex outer end can be tilted at any random angle, and at the same time provides optimal support at any of these angles to the solar panel to be supported. This makes it possible to give the support structure, and thereby the solar panels, an optimal orientation relative to the insolation and/or light radiation (on the solar panels).

The coupling means of the bottom support comprise threaded sleeves with internal screw thread or wherein the coupling means of the bottom support comprise threaded ends extending substantially vertically from the bottom support.

In case the coupling means of the bottom support comprise threaded sleeves with internal screw thread, the upright and the bottom support are mutually connected by means of individual screws or bolts, which are inserted through openings in the one or more edge parts of the upright and are screwed into the threaded sleeves of the bottom support.

In the case that the bottom support is manufactured from concrete, the threaded sleeves can for instance be cast into the concrete.

The coupling means of the bottom support alternatively comprise threaded ends extending substantially vertically from the bottom support, in which case the upright and the bottom support are mutually connected by inserting the threaded ends extending from the bottom support through the openings of the one or more edge parts and then arranging a nut on the threaded ends.

In a preferred embodiment the one or more edge parts are formed by a flange arranged round the upright.

In other words, a plate-like edge part is provided all around on the outer wall of the upright.

In a preferred embodiment the openings in the edge parts lie substantially in one plane, and these openings are provided at the corner points of an imaginary equilateral polygon, preferably an equilateral triangle.

In other words, there are at least three openings, all lying in one plane and at substantially the same distance from each other.

In a further preferred embodiment the flange is substantially triangular and the openings are provided close to the corners of the triangular flange.

In a preferred embodiment the bottom support is substantially plate-like.

The bottom support is preferably manufactured from concrete.

In a further preferred embodiment the construction element further comprises a clamp which is clamped round an upper part of the upright for the purpose of attaching a framework for supporting solar panels to the upright with the clamp.

Providing a clamp round the upper part of the upright, i.e. a part situated above the one or more edge parts, enables easy adjustment of the position of the clamp along the upright.

The invention further relates to a support structure for solar panels, comprising a number of construction elements as described above.

The invention further relates to a bottom support for a construction element for a support structure for solar panels, which is substantially plate-like and comprises an elevation, which elevation is provided with coupling means for forming an adjustable screw connection between an upright of the construction element and the bottom support.

The invention moreover relates to an upright for a construction element for a support structure for solar panels, wherein a lower part of the upright is provided on its outer wall with one or more edge parts situated some distance from the lower outer end of the upright, wherein openings are provided in the one or more edge parts for the purpose of receiving threaded ends of a screw connection. The lower outer end of the upright is preferably rounded.

Finally, the invention relates to a method for making a construction element as described above, comprising of:
- manufacturing an upright, wherein one or more edge parts are provided on the outer wall on a lower part of the upright, some distance from the lower outer end of the upright, and wherein openings are arranged in the one or more edge parts;
- manufacturing a bottom support for weighting the construction element, wherein the bottom support is provided with coupling means;
- coupling the upright to the coupling means of the bottom support by means of a screw connection, wherein threaded ends of the screw connection are inserted through the openings in the one or more edge parts of the upright.

The support structure, the bottom support, the upright and the method according to the invention have the same advantages and effects as described above for the construction element.

Further advantages, details and effects of the invention will be described on the basis of exemplary embodiments thereof, wherein reference is made to the accompanying figures.
Figures 1A-C show a bottom support of a construction element for a support structure for solar panels according to an embodiment of the invention in respectively top view, side view and perspective view;
Figure 2A shows a perspective view of the bottom support according to figures 1A-C with an additional bottom plate;
Figure 2B shows schematically an alternative bottom support with a number of additional bottom plates;
Figures 3A-B show an embodiment of an upright of a construction element for a support structure for solar panels according to an embodiment of the invention;
Figures 3C-D show details of the flange of the upright of figures 3A-B;
Figure 4 shows a construction element for a support structure for solar panels according to an embodiment of the invention, comprising the bottom support of figure 2A and the upright of figures 3A-D;
Figure 5 shows a perspective view of a construction element according to an alternative embodiment of the invention;
Figure 6 shows schematically a construction element according to figure 4, equipped with a clamp for attaching a framework for supporting solar panels; and
Figures 7A-B show schematically a support structure for solar panels according to an embodiment of the invention in respectively perspective and side view.

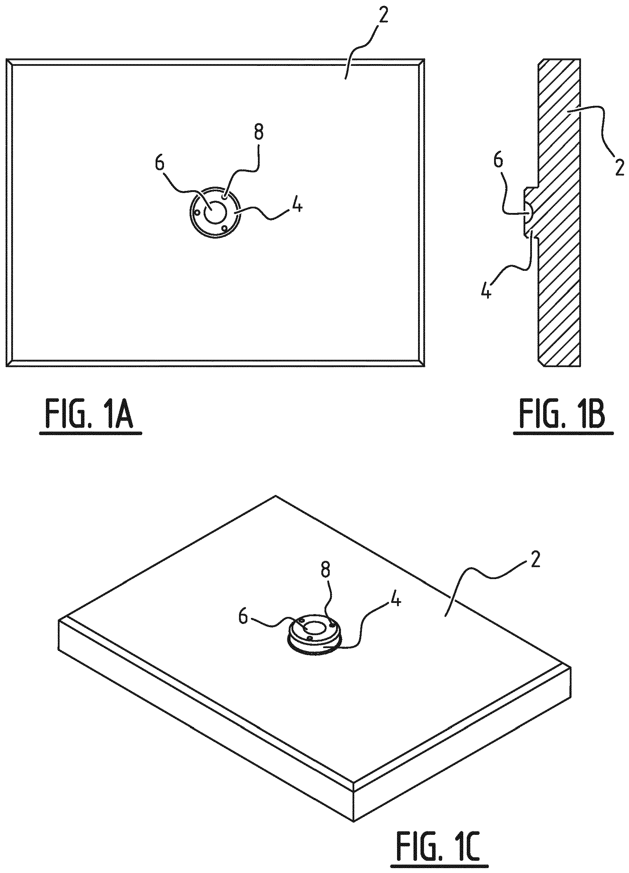

In an embodiment a bottom support 2 (figures 1A-C) is embodied as a concrete slab. Concrete slab 2 can for instance have a weight of 400 kg-800 kg. In the shown example the concrete slab has a weight about 600 kg.

Concrete slab 2 comprises on its upper side a central elevation 4. Although it is preferred to arranged elevation 4 centrally, it is alternatively possible to arrange elevation 4 away from the centre.

A central recess 6 is arranged centrally in elevation 4. Around recess 6 of elevation 4 threaded sleeves 8 are cast into the concrete for the purpose of receiving a threaded end of a screw or bolt.

In the shown embodiment elevation 4 has a circular section, and the edge of recess 6 is also circular. Alternatively, it is possible to opt for a recess 6 and/or elevation 4 with a different shape. Elevation 4 and/or recess 6 is for instance embodied with a rectangular section.

In the shown embodiment recess 6 is cup-like. Recess 6 can however also retain substantially the same section over its whole depth. Recess 6 can for instance take a cylindrical form.

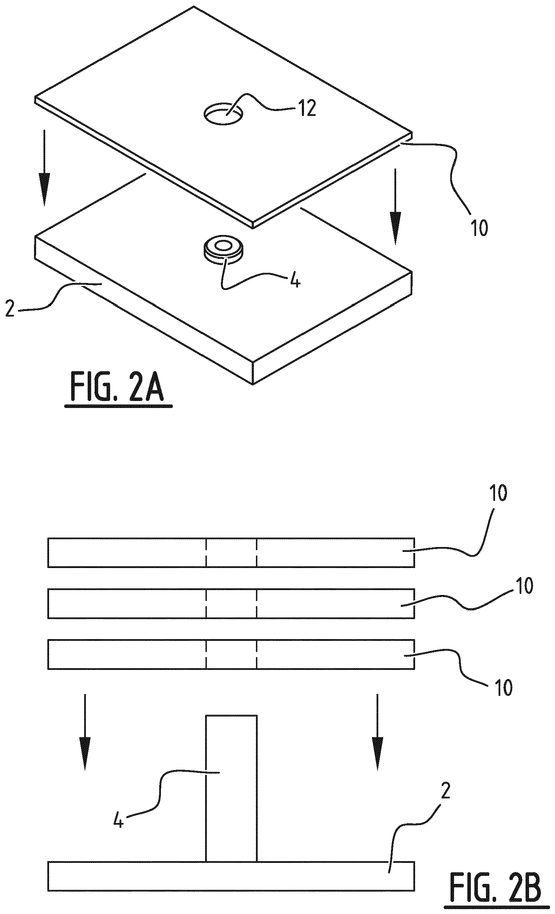

Elevation 4 of the bottom plate can be used for placing an additional bottom plate 10 (figure 2A) on bottom plate 2. The upward protruding elevation 4 is here received in an opening 12 of the additional bottom plate 10. Bottom plate 2 for instance takes a relatively light form, for instance 200-300 kg, and the second bottom plate 10, likewise having a weight of 200-300 kg, is placed on bottom plate 2 for the purpose of together forming a weighting of 400-600 kg.

In an alternative embodiment (figure 2B) a plurality of additional bottom plates 10 are provided. Elevation 4 has a height corresponding to at least the height of the stack of additional bottom plates 10. Three additional bottom plates 10 are for instance provided, as shown in the example. Each bottom plate 2, 10 for instance has a weight of about 100-150 kg.

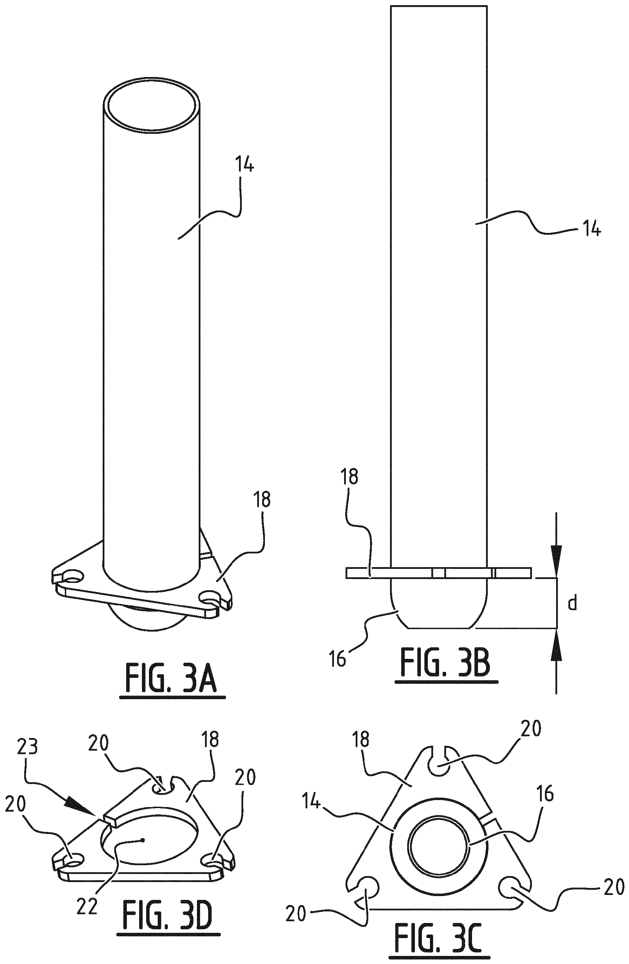

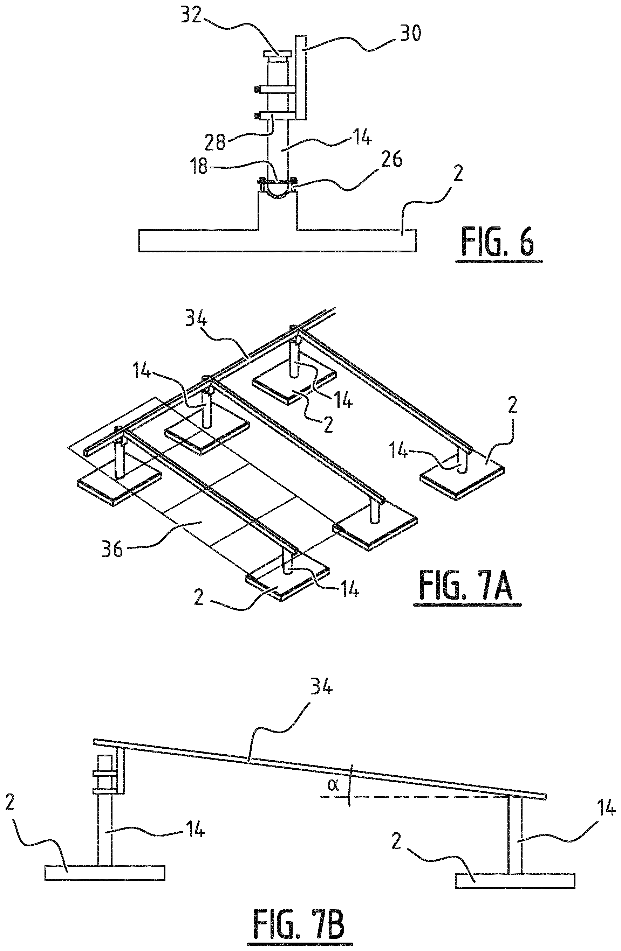

According to an embodiment, upright 14 (figure 3A) is embodied as a steel tube. The lower outer end 16 of the tube is optionally rounded (figure 3B). In addition, the lower outer end 16 of the tube can optionally also take a convex form (see figure 6). A flange 18 is provided on the lower part of upright 14 at some distance d from the lower outer end of upright 14. In the shown example flange 18 is welded onto upright 14.

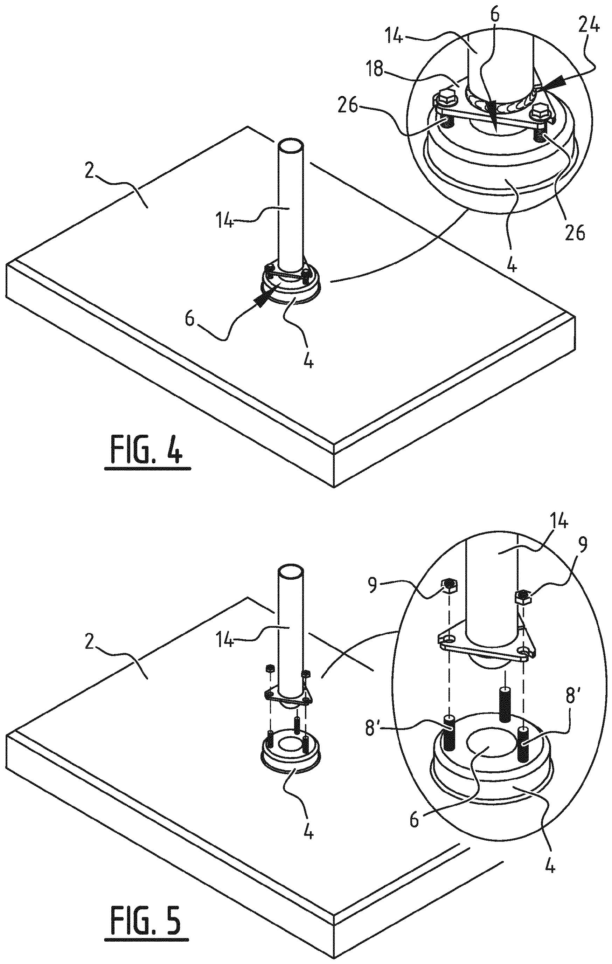

In the shown example flange 18 is substantially triangular (figure 3C). Provided in the corner points of flange 18 are openings 20 for receiving a screw or bolt. A central opening 22 (figure 3D) is further provided in flange 18 for the purpose of receiving the tube of upright 14. When flange 18 is placed round the tube, they are preferably welded to each other in order to thus form upright 14. Figure 4 shows the welded seam 24.

In the embodiment according to figure 4 bottom support 2 and upright 14 are coupled to each other by means of bolts 26 which extend through the openings 20 of flange 18 and are screwed into the threaded sleeves 8 of bottom support 2. The rounded outer end 16 of upright 14 here rests on the bottom of recess 6 in elevation 4. The orientation of upright 14 relative to bottom plate 2 can be adjusted by adjusting the bolts 26.

In an alternative embodiment (figure 5) threaded ends 8' are provided round recess 6 of the elevation 4 of bottom plate 2. Threaded ends 8' are preferably cast into the concrete. For the purpose of coupling upright 14 to bottom support 2 the threaded ends 8' are inserted through the openings 20 of flange 18, and a nut 9 is then screwed onto each threaded end 8'. In this embodiment the lower outer end of upright 14 also rests on the bottom of recess 6 in elevation 4.

A clamp 28 is optionally attached to an upper part of upright 14 (figure 6). Clamp 28 is coupled to a body 30 for the purpose of attaching thereto a framework for supporting solar panels. Body 30 is for instance embodied as a plate, tube or bracket, preferably from a metal or metal alloy such as steel.

The upper side of the tube of upright 14 is further optionally sealed by a stop 32 in order to prevent water being able to find its way into upright 14.

Figure 7A shows schematically a support structure for solar panels. A plurality of construction elements are mounted some distance from each other, wherein the bottom supports 2 are placed on the ground and uprights 14 are oriented upright by means of the bolts or screws with which uprights 14 are coupled to bottom supports 2. A framework 34 on which solar panels 36 can be placed is attached to uprights 14, for instance by mounting on attaching means 30. Framework 34 is preferably placed at an angle α relative to the horizontal, as shown in figure 7B. The support structure for solar panels, as also shown in figures 7A and 7B, can in principle be placed at any angle in the length direction (see inter alia angle α in figure 7B). In addition, the structure can also be tilted at an angle as seen in the width direction of the solar panels for placing. This can be as alternative to angle α or in addition to angle α (so that the solar panels are placed at an angle both in the length and the width direction). An optimal orientation of the solar panels relative to the insolation can in this way be realized.

The invention is by no means limited to the above described embodiments thereof. The rights sought are defined by the following claims, within the scope of which many modifications can be envisaged. It is for instance possible to provide a bottom support 2 with a plurality of elevations 4, each comprising threaded sleeves 8 or threaded ends 8', so that a plurality of uprights 14 can be coupled to a single bottom support 2.

## Claims

1. Construction element for a support structure for solar panels (36), comprising:
- an upright (14), wherein the lower outer end (16) of the upright is rounded; and
- a bottom support (2) for weighting the construction element, which bottom support comprises on its upper side a recess (6) for the purpose of receiving the lower outer end of the upright, wherein coupling means are provided round the recess for the purpose of forming an adjustable screw connection between the upright and the bottom support;
wherein a lower part of the upright is provided on its outer wall with one or more edge parts situated some distance from the lower outer end of the upright, wherein a total of at least three openings (20) are provided in the one or more edge parts for the purpose of receiving threaded ends of the screw connection, and wherein the coupling means of the bottom support comprise threaded sleeves with internal screw thread or wherein the coupling means of the bottom support comprise threaded ends extending substantially vertically from the bottom support.

2. Construction element as claimed in claim 1, wherein an elevation (4), which is equipped with the coupling means for forming the screw connection, is provided on the upper side of the bottom support (2), wherein the recess is preferably provided in the elevation.

3. Construction element as claimed in claim 1 or 2, further comprising an additional weighting part which is provided with an opening in which the elevation of the bottom support fits for the purpose of placing the additional weighting part on the bottom support.

4. Construction element as claimed in any one of the foregoing claims, wherein the one or more edge parts are formed by a flange (18) arranged round the upright.

5. Construction element as claimed in any one of the foregoing claims, wherein the openings in the edge parts lie substantially in one plane, and are provided at the corner points of an imaginary equilateral polygon, preferably a triangle.

6. Construction element as claimed in claims 4 and 5, wherein the flange is substantially triangular and the openings (20) are provided close to the corners of the triangular flange.

7. Construction element as claimed in any one of the foregoing claims, wherein the bottom support is substantially plate-like, wherein the bottom support is preferably manufactured from concrete.

8. Construction element as claimed in any one of the foregoing claims, further comprising a clamp (28) which is clamped round an upper part of the upright for the purpose of attaching a framework (34) for supporting solar panels to the upright with the clamp.

9. Support structure for solar panels (36), comprising a number of construction elements as claimed in any one of the foregoing claims.

10. Bottom support (2) for a construction element for a support structure for solar panels (36) according to any one of the claims 1-8, which is substantially plate-like and comprises an elevation (4) in which a recess (6) for the purpose of receiving a lower outer end of the upright is provided, wherein coupling means are provided round the recess for the purpose of forming an adjustable screw connection between an upright (14) of the construction element and the bottom support, and wherein the coupling means of the bottom support comprise threaded sleeves with internal screw thread, or wherein the coupling means of the bottom support comprise threaded ends extending substantially vertically from the bottom support.

11. Upright (14) for a construction element for a support structure for solar panels (36) according to any one of the claims 1-8, wherein the lower outer end (16) of the upright is rounded, wherein a lower part (16) of the upright is provided on its outer wall with one or more edge parts situated some distance from the lower outer end of the upright, wherein a total of at least three openings (20) are provided in the one or more edge parts for the purpose of receiving threaded ends of a screw connection.

12. Method for making a construction element as claimed in any one of the claims 1 - 8, comprising the steps of:
- manufacturing an upright (14), wherein the lower outer end (16) of the upright is rounded and wherein one or more edge parts are provided on the outer wall on a lower part (16) of the upright, some distance from the lower outer end of the upright, and wherein openings (20) are arranged in the one or more edge parts;
- manufacturing a bottom support (2) for weighting the construction element, wherein the bottom support is provided with coupling means providing on its upper side a recess (6) for the purpose of receiving the lower outer end of the upright, wherein coupling means are provided round the recess for the purpose of forming an adjustable screw connection between the upright and the bottom support;
- providing a lower part of the upright on its outer wall with one or more edge parts situated some distance from the lower outer end of the upright,
- providing a total of at least three openings (20) in the one or more edge parts for the purpose of receiving threaded ends of the screw connection,
- and providing the coupling means of the bottom support comprising threaded sleeves with internal screw thread or providing the coupling means of the bottom support with comprise threaded ends extending substantially vertically from the bottom support.
- coupling the upright to the coupling means of the bottom support by means of
a screw connection, wherein threaded ends of the screw connection are inserted
through the openings in the one or more edge parts of the upright

## Patentansprüche

1. Bauelement für eine tragende Struktur für Solarmodule (36), umfassend:
- einen Pfosten (14), wobei das untere äußere Ende (16) von dem Pfosten abgerundet ist; und
- eine Bodenstruktur (2) zum Beschweren des Bauelements, wobei die Bodenstruktur auf ihrer oberen Seite eine Ausnehmung (6) zum Zwecke des Aufnehmens des unteren Endes von dem Pfosten umfasst, wobei ein Kopplungsmittel um die Ausnehmung herum zum Zwecke des Bildens einer einstellbaren Schraubenverbindung zwischen dem Pfosten und der Bodenstruktur vorgesehen ist;
wobei ein unterer Teil von dem Pfosten auf seiner äußeren Wand mit einem oder mehreren Kantenteil/-en versehen ist, welches/welche in einem Abstand von dem äußeren unteren Ende von dem Pfosten angeordnet ist/sind, wobei insgesamt zumindest drei Öffnungen (20) in einem oder mehreren Kantenteil/-en vorgesehen ist/sind zum Zwecke des Aufnehmens von mit Gewinde versehenen Enden der Schraubenverbindung, und wobei das Kopplungsmittel von der Bodenstruktur mit Gewinde versehene Hülsen mit einem inneren Schraubengewinde umfasst, oder wobei das Kopplungsmittel von der Bodenstruktur mit Gewinde versehene Enden umfasst, welche sich im Wesentlichen vertikal von der Bodenstruktur erstrecken.

2. Bauelement gemäß Anspruch 1, wobei eine Erhöhung (4), welche mit dem Kopplungsmittel zum Bilden der Schraubenverwendung ausgestattet ist, auf der oberen Seite von der Bodenstruktur (2) vorgesehen ist, wobei die Ausnehmung vorzugsweise in der Erhöhung vorgesehen ist.

3. Bauelement gemäß Anspruch 1 oder 2, weiterhin ein zusätzliches Gewichtsteil umfassend, welches mit einer Öffnung versehen ist, in welcher die Erhöhung von der Bodenstruktur passt zum Zwecke des Platzierens des zusätzlichen Gewichtsteils auf der Bodenstruktur.

4. Bauelement gemäß irgendeinem der vorhergehenden Ansprüche, wobei das eine oder die mehreren Kantenteil/-e durch einen Flansch (18) gebildet ist/sind, welche/welches um den Pfosten herum angeordnet ist/sind.

5. Bauelement gemäß irgendeinem der vorhergehenden Ansprüche, wobei die Öffnungen in den Kantenteilen im Wesentlichen in einer Ebene liegen, und an den Eckpunkten von einem imaginären gleichseitigen Polygon, vorzugsweise einem Dreieck, vorgesehen sind.

6. Bauelement gemäß Anspruch 4 und 5, wobei der Flansch im Wesentlichen dreieckig ist, und wobei die Öffnungen (20) dicht an den Ecken von dem dreieckigen Flansch vorgesehen sind.

7. Bauelement gemäß irgendeinem der vorhergehenden Ansprüche, wobei die Bodenstruktur im Wesentlichen plattenartig ist, wobei die Bodenstruktur vorzugsweise aus Beton hergestellt ist.

8. Bauelement gemäß irgendeinem der vorhergehenden Ansprüche, weiterhin eine Klammer (28) umfassend, welche um ein oberes Teil von dem Pfosten herum geklemmt ist zum Zwecke des Befestigens eines Rahmens (34) zum Tragen der Solarmodule an dem Pfosten mittels der Klammer.

9. Trägerstruktur für Solarmodule (36), welche eine Anzahl von Bauelementen gemäß irgendeinem der vorhergehenden Ansprüche umfasst.

10. Bodenstruktur (2) für ein Bauelement für eine Trägerstruktur für Solarmodule (36) gemäß irgendeinem der Ansprüche 1-8, welche im Wesentlichen plattenartig ist und eine Erhöhung (4) umfasst, in welcher eine Ausnehmung (6) zum Zwecke des Aufnehmens eines unteren äußeren Endes von dem Pfosten vorgesehen ist, wobei ein Kopplungsmittel um die Ausnehmung herum vorgesehen ist zum Zwecke des Bildens einer einstellbaren Schraubenverbindung zwischen einem Pfosten (14) von dem Bauelement und der Bodenstruktur, und wobei das Kopplungsmittel von der Bodenstruktur mit Gewinde versehene Hülsen mit einem inneren Schraubengewinde umfasst, oder wobei das Kopplungsmittel von der Grundstruktur mit Gewinde versehene Enden umfasst, welche sich im Wesentlichen vertikal von der Grundstruktur erstrecken.

11. Pfosten (14) für ein Bauelement für eine Trägerstruktur für Solarmodule (36) gemäß irgendeinem der Ansprüche 1-8, wobei das untere äußere Ende (16) von dem Pfosten abgerundet ist, wobei ein unteres Teil (16) von dem Pfosten auf seiner äußeren Wand mit einem oder mehreren Kantenteilen versehen ist, welche in einigem Abstand von dem äußeren unteren Ende von dem Pfosten vorgesehen sind, wobei insgesamt zumindest drei Öffnungen (20) in dem einen oder mehreren Kantenteilen vorgesehen sind zum Zwecke des Aufnehmens von mit Gewinde versehenen Enden von einer Schraubenverbindung.

12. Verfahren zum Herstellen eines Bauelements gemäß irgendeinem der Ansprüche 1-8, die folgenden Schritte umfassend:
- Herstellen eines Postens (14), wobei das untere äußere Ende (16) von dem Pfosten abgerundet ist, und wobei eines oder mehrere Kantenteile auf der äußeren Wand auf einem unteren Teil (16) von dem Pfosten vorgesehen ist/sind, in einigem Abstand von dem unteren äußeren Ende von dem Pfosten, und wobei Öffnungen (20) in einem oder mehreren Kantenteilen angeordnet sind;
- Herstellen einer Bodenstruktur (2) zum Beschweren des Bauelements, wobei die Grundstruktur mit dem Kopplungsmittel versehen ist, welches auf seiner oberen Seite eine Ausnehmung (6) zum Zwecke des Aufnehmens des unteren äußeren Endes von dem Pfosten vorsieht, wobei das Kopplungsmittel um die Ausnehmung herum vorgesehen ist zum Zwecke des Bildens einer einstellbaren Schraubenverbindung zwischen dem Pfosten und der Bodenstruktur;
- Vorsehen eines unteren Teils von dem Pfosten auf seiner äußeren Wand mit einem oder mehreren Kantenteilen, welche in einigem Abstand von dem äußeren unteren Ende von dem Pfosten vorgesehen sind,
- Vorsehen von insgesamt zumindest drei Öffnungen (20) in einem oder mehreren Kantenteilen zu dem Zweck des Aufnehmens von mit Gewinde versehenen Enden von der Schraubenverbindung,
- und Vorsehen des Kopplungsmittels von der Bodenstruktur, welches mit Gewinde versehene Hülsen umfasst, mit einem mit Gewinde versehenen Inneren oder Vorsehen des Kopplungsmittels auf der Grundstruktur, welche mit Gewinde versehene Enden umfasst, welche sich im Wesentlichen vertikal von der Bodenstruktur erstrecken,
- Koppeln des Pfostens an das Kopplungsmittel von der Grundstruktur mittels einer Schraubenverbindung, wobei mit Gewinde versehene Enden von der Schraubenverbindung durch die Öffnungen in dem einen oder mehreren Kantenteil/-en von dem Pfosten eingeführt werden.

## Revendications

1. Élément de construction destiné à une structure de support pour panneaux solaires (36), comprenant :
un montant (14), dans lequel l'extrémité inférieure externe (16) du montant est arrondie ; et
un support inférieur (2) destiné à lester l'élément de construction, lequel support inférieur comprend sur sa face supérieure une cavité (6) destinée à recevoir l'extrémité inférieure externe du montant, dans lequel des moyens de couplage sont formés autour de la cavité dans le but de former une liaison vissée réglable entre le montant et le support inférieur ;
dans lequel une partie inférieure du montant comporte, sur sa paroi externe, une ou plusieurs parties de bord situées à une certaine distance de l'extrémité inférieure externe du montant, dans lequel, au total, au moins trois ouvertures (20) sont formées sur la ou les parties de bord dans le but de recevoir des extrémités filetés de la liaison vissée, et dans lequel les moyens de couplage du support inférieur comprennent des manchons filetés avec des filets de vis internes ou dans lequel les moyens de couplage du support inférieur comprennent des extrémités filetées s'étendant sensiblement verticalement à partir du support inférieur.

2. Élément de construction selon la revendication 1, dans lequel une saillie (4), qui est équipée des moyens de couplage afin de former la liaison vissée, est formée sur la face supérieure du support inférieur (2), dans lequel la cavité est, de préférence, formée sur la saillie.

3. Élément de construction selon la revendication 1 ou 2, comprenant, en outre, une partie de lest supplémentaire qui comporte une ouverture dans laquelle la saillie du support inférieur s'assemble dans le but de placer la partie de lest supplémentaire sur le support inférieur.

4. Élément de construction selon l'une quelconque des revendications précédentes, dans lequel la ou les parties de bord sont formées par une bride (18) agencée autour du montant.

5. Élément de construction selon l'une quelconque des revendications précédentes, dans lequel les ouvertures sur les parties de bord reposent sensiblement dans un plan et sont formées au niveau des points d'angle d'un polygone équilatéral imaginaire, de préférence, un triangle.

6. Élément de construction selon les revendications 4 et 5, dans lequel la bride est sensiblement triangulaire et les ouvertures (20) sont formées à proximité des angles de la bride triangulaire.

7. Élément de construction selon l'une quelconque des revendications précédentes, dans lequel le support inférieur est sensiblement en forme de plaque, dans lequel le support inférieur est, de préférence, fabriqué à base de béton.

8. Élément de construction selon l'une quelconque des revendications précédentes, comprenant, en outre, une bride (28) qui est serrée autour d'une partie supérieure du montant dans le but de fixer une structure (34) destinée à supporter des panneaux solaires sur le montant avec la bride.

9. Structure de support pour panneaux solaires (36), comprenant un certain nombre d'éléments de construction selon l'une quelconque des revendications précédentes.

10. Support inférieur (2) destiné à un élément de construction d'une structure de support pour panneaux solaires (36) selon l'une quelconque des revendications 1 à 8, qui est sensiblement en forme de plaque et comprend une saillie (4) dans laquelle une cavité (6) destinée à recevoir une extrémité inférieure externe du montant est formée, dans lequel les moyens de couplage sont prévus autour de la cavité dans le but de former une liaison vissée réglable entre un montant (14) de l'élément de construction et le support inférieur, et dans lequel les moyens de couplage du support inférieur comprennent des manchons filetés avec des filets de vis internes, ou dans lequel les moyens de couplage du support inférieur comprennent des extrémités filetées s'étendant sensiblement verticalement à partir du support inférieur.

11. Montant (14) destiné à un élément de construction pour une structure de support de panneaux solaires (36) selon l'une quelconque des revendications 1 à 8, dans lequel l'extrémité inférieure externe (16) du montant est arrondie, dans lequel une partie inférieure (16) du montant comporte, sur sa paroi externe, une ou plusieurs parties de bord situées à une certaine distance de l'extrémité inférieure externe du montant, dans lequel, au total, au moins trois ouvertures (20) sont formées sur la ou les parties de bord dans le but de recevoir les extrémités filetés d'une liaison vissée.

12. Procédé de réalisation d'un élément de construction selon l'une quelconque des revendications 1 à 8, comprenant les étapes de :
fabrication d'un montant (14), dans lequel l'extrémité inférieure externe (16) du montant est arrondie et dans lequel une ou plusieurs parties de bord sont agencées sur la paroi externe, sur une partie inférieure (16) du montant, à une certaine distance par rapport à l'extrémité inférieure externe du montant, et dans lequel des ouvertures (20) sont agencées sur la ou les parties de bord ;
fabrication d'un support inférieur (2) afin de lester l'élément de construction, dans lequel le support inférieur comporte des moyens de couplage comportant, sur sa face supérieure, une cavité (6) dans le but de recevoir l'extrémité inférieure externe du montant, dans lequel des moyens de couplage sont prévus autour de la cavité dans le but de former une liaison vissée réglable entre le montant et le support inférieur ;
agencement sur une partie inférieure du montant, sur sa paroi externe, d'une ou plusieurs parties de bord situées à une certaine distance de l'extrémité inférieure externe du montant,
agencement d'un total d'au moins trois ouvertures (20) sur la ou les parties de bord dans le but de recevoir des extrémités filetées de la liaison vissée,
et agencement sur le moyen de couplage du support inférieur comprenant des manchons filetés avec un filet de vis interne ou agencement, sur les moyens de couplage du support inférieur, d'extrémités filetées s'étendant sensiblement verticalement à partir du support inférieur,
couplage du montant sur les moyens de couplage du support inférieur au moyen d'une liaison vissée, dans lequel des extrémités filetées de la liaison vissée sont insérées à travers les ouvertures de la ou des parties de bord du montant.
